# EUROPEAN PATENT APPLICATION

(11) **EP 3 825 088 A1**
(43) Date of publication of application: **26.05.2021**
(21) Application number: 19838156.8
(22) Date of filing: 01.04.2019
(51) Int. Cl.: B29C 43/02, F16J 3/02, B29K 27/12

(54) **FLUORINE RESIN MOLDED ARTICLE, MEDICAL DIAPHRAGM, AND SEMICONDUCTOR DIAPHRAGM**

(30) Priority: 20.07.2018 JP 2018136882
(71) Applicant: Taiyo Packing Co.,Ltd., Mine-shi, Yamaguchi, 759-2211 (JP)
(72) Inventor: HIGUCHI, Junichi, Mine-shi, Yamaguchi 759-2211 (JP)
(74) Representative: Cabinet Beau de Loménie
(86) International application number: PCT/JP2019/014516
(87) International publication number: WO 2020/017107

(57) **Abstract**

Provided is a fluororesin molded article (50) in which a plurality of sections (51a, 51b, 52) having respective functions different from each other are integrally formed and which has characteristics suitable for the functions at the respective sections. A fluororesin molded article (50) characterized in that it is an integrally molded product including a first section (51a, 51b) and a second section (52), a function of the first section being different from a function of the second section, and the first section and the second section are a sintered body of a fluororesin powder, an average particle size of the fluororesin powder contained in the first section being different from an average particle size of the fluororesin powder contained in the second section.

## Description

### TECHNICAL FIELD

The present invention relates to a fluororesin molded article that is an integrally molded product including a first section and a second section, a function of the first section being different from a function of the second section. The present invention also relates to a medical diaphragm for use in production of a serum or vaccine, and a diaphragm for semiconductor for use in cleaning of a semiconductor product.

### BACKGROUND ART

Fluororesins, such as polytetrafluoroethylene (hereinafter referred to as "PTFE"), have excellent heat resistance, chemical resistance, etc., and therefore, are suitably used as a material for diaphragms, bellows, etc.

As a molding method for fluororesin molded articles, compression molding is conventionally known. For example, there is a PTFE molded article obtained by compression-molding a PTFE powder having an average particle size of 200-1000 µm (see, for example, Patent Document 1). Patent Document 1 indicates that such a PTFE molded article has a small number of voids, and therefore, can be used as a diaphragm having excellent mechanical strength and sealing properties.

### CITATION LIST

### PATENT LITERATURE

Patent Document 1: International Publication WO2008/069196

### SUMMARY OF INVENTION

### TECHNICAL PROBLEM

Incidentally, some diaphragm product has a membrane section which is subjected to repetitive deformation in use, and in addition, a valve section which is a non-deformation part, and the like, and thus the sections have respective functions different from each other. In such a diaphragm, for example, the membrane section is required to have bending resistance, and the valve section is required to have wear resistance, and the like, i.e. the sections require respective specifications different from each other. In order to meet such required specifications, product design depending on specifications required for each section is needed, such as changing the degree of crystallinity of a resin for each section.

However, in the PTFE molded article described in Patent Document 1, it is not assumed that the degree of crystallinity is changed for each section of the diaphragm. In conventional techniques including that described in Patent Document 1, sections such as the repetitive-deformation section and the non-deformation section are formed as separate fluororesin molded articles, which are joined together after molding to produce a diaphragm including sections having respective characteristics different from each other. However, in a diaphragm produced by such a production method, the joint portion is likely to have insufficient strength. In addition, the sections require respective quality managements different from each other, disadvantageously leading to an increase in manufacturing cost.

With the above problems in mind, the present invention has been made. It is an object of the present invention to provide a fluororesin molded article in which a plurality of sections having respective characteristics different from each other are integrally formed. It is another object of the present invention to provide a medical diaphragm for use in production of a serum or vaccine, using the fluororesin molded article, and a diaphragm for semiconductor that is used to clean a semiconductor product, using the fluororesin molded article.

### SOLUTION TO PROBLEM

A characteristic feature of a fluororesin molded article according to the present invention for achieving the above object is a fluororesin molded article that is an integrally molded product including a first section and a second section, a function of the first section being different from a function of the second section, wherein the first section and the second section are a sintered body of a fluororesin powder, the fluororesin powders contained in the first and second sections having respective average particle sizes from each other.

In the fluororesin molded article having this feature, the first section and the second section are a sintered body of a fluororesin powder, an average particle size of the fluororesin powder contained in the first section being different from an average particle size of the fluororesin powder contained in the second section, and therefore, in the fluororesin molded article, the sections have respective characteristics such as the degree of crystallinity different from each other. As a result, an integrally molded product can be formed in which the qualities of the first section and the second section having respective characteristics different from each other can be simultaneously managed, and therefore, the manufacturing cost can be reduced.

In the fluororesin molded article of the present invention, the first section is preferably a non-deformation section formed of a sintered body of a fluororesin powder having an average particle size of 300 µm or more, and the second section is preferably a repetitive-deformation section formed of a sintered body of a fluororesin powder having an average particle size of 100 µm or less.

According to the fluororesin molded article having this feature, the first section is formed of a sintered body of a fluororesin powder having an average particle size of 300 µm or more, and therefore, has excellent wear resistance characteristics required for a non-deformation section, and the second section is formed of a sintered body of a fluororesin powder having an average particle size of 100 µm or less, and therefore, has excellent bending resistance characteristics required for a repetitive-deformation section that is repetitively deformed in use.

In the fluororesin molded article of the present invention, the first section is preferably a non-deformation section formed of a fluororesin having a degree of crystallinity of 50-70%, and the second section is preferably a repetitive-deformation section formed of a fluororesin having a degree of crystallinity of not less than 30% and less than 50%.

According to the fluororesin molded article having this feature, the first section is formed of a fluororesin having a degree of crystallinity of 50-70%, and therefore, has excellent wear resistance characteristics required for a non-deformation section, and the second section is formed of a fluororesin having degree of crystallinity of not less than 30% and less than 50%, and therefore, has excellent bending resistance characteristics required for a repetitive-deformation section that is repetitively deformed in use.

In the fluororesin molded article of the present invention, the fluororesin is preferably polytetrafluoroethylene.

According to the fluororesin molded article having this feature, the fluororesin is polytetrafluoroethylene, and therefore, the fluororesin molded article has excellent heat resistance and chemical resistance.

In the fluororesin molded article of the present invention, the repetitive-deformation section is preferably formed as a membrane section of a diaphragm, the membrane section having a curved cross-sectional shape, the non-deformation section is preferably formed as a column-shaped linking section extending from the membrane section on a convex surface of the curved shape, and a valve section integrally provided at an end of the linking section and having a shape wider than the linking section in a direction perpendicular to an extension direction of the linking section, and a metal member having a first and a second end portion, the first end portion being wider than the second end portion, is preferably embedded by insert molding with the first end portion disposed inside the valve section, and the second end portion exposed from the membrane section on a concave surface of the curved shape.

According to the fluororesin molded article having this feature, the repetitive-deformation section is formed as a membrane section of a diaphragm, the membrane section having a curved cross-sectional shape, the non-deformation section is formed as a column-shaped linking section extending from the membrane section on a convex surface of the curved shape, and a valve section integrally provided at an end of the linking section and having a shape wider than the linking section, and a metal member having a first and a second end portion, the first end portion being wider than the second end portion, is embedded by insert molding with the wider end portion disposed inside the valve section, and the second end portion exposed from the membrane section on a concave surface of the curved shape. Therefore, even when the metal member is pulled toward the concave surface of the membrane section, the metal member can be reliably prevented from dropping from the fluororesin molded article. Therefore, a fluororesin molded article can be formed that has excellent durability when the diaphragm is repetitively driven with the metal member attached to a drive device.

A characteristic feature of a medical diaphragm according to the present invention for achieving the above object is a medical diaphragm for use in production of a serum or vaccine, the medical diaphragm including the fluororesin molded article of any one of the above features.

In conventional techniques, in a diaphragm obtained by forming a plurality of parts as separate fluororesin molded articles, and joining the parts together after molding, the joint portion is likely to be contaminated. If such a diaphragm is used in production of a serum or vaccine, the resultant serum or vaccine is likely to be mixed with bacteria, etc. The medical diaphragm having this feature is an integrally molded product including a first section and a second section, a function of the first section being different from a function of the second section, and therefore, a serum or vaccine is unlikely to be mixed with bacteria, etc., due to the joint portion contamination. In addition, in the medical diaphragm having this feature, the fluororesin provides an inactive interface, and therefore, mixing with bacteria, etc., from the surface of the medical diaphragm is inhibited, and therefore, a highly-safe serum or vaccine can be produced.

A characteristic feature of a medical diaphragm according to the present invention for achieving the above object is a medical diaphragm for use in production of a serum or vaccine, the medical diaphragm including the fluororesin molded article of any one of the above features, wherein the non-deformation section is formed as a valve section of the diaphragm, and the repetitive-deformation section is formed as a membrane section of the diaphragm.

According to the medical diaphragm having this feature, the medical diaphragm is an integrally molded product including a membrane section and a valve section having respective characteristics different from each other, and therefore, a serum or vaccine is unlikely to be mixed with bacteria, etc., due to the joint portion contamination. In addition, in the medical diaphragm having this feature, the fluororesin provides an inactive interface, and therefore, mixing with bacteria, etc., from the surface of the medical diaphragm is inhibited, and therefore, a highly-safe serum or vaccine can be produced.

A characteristic feature of a diaphragm for semiconductor according to the present invention for achieving the above object is a diaphragm for semiconductor for use in cleaning of a semiconductor product, the diaphragm including the fluororesin molded article of any one of the above features.

In conventional techniques, in a diaphragm obtained by forming a plurality of parts as separate fluororesin molded articles, and joining the parts together after molding, the joint portion is likely to be contaminated. If such a diaphragm is used in cleaning of a semiconductor product, the resultant semiconductor product is likely to be mixed with impurities, contamination, etc. The diaphragm for semiconductor having this feature is an integrally molded product including a first section and a second section, a function of the first section being different from a function of the second section, and therefore, a semiconductor product is unlikely to be mixed with impurities, contamination, etc., due to the joint portion contamination. In addition, in the diaphragm for semiconductor having this feature, the fluororesin provides an inactive interface, and therefore, mixing with impurities, contamination, etc., from the surface of the diaphragm for semiconductor is inhibited, and therefore, a semiconductor product can be highly cleaned.

A characteristic feature of a diaphragm for semiconductor according to the present invention for achieving the above object is a diaphragm for semiconductor for use in cleaning of a semiconductor product, the diaphragm including the fluororesin molded article of any one of the above features, wherein the non-deformation section is formed as a valve section of the diaphragm, and the repetitive-deformation section is formed as a membrane section of the diaphragm.

According to the diaphragm for semiconductor having this feature, the diaphragm for semiconductor is an integrally molded product including a membrane section and a valve section having respective characteristics different from each other, and therefore, a semiconductor product is unlikely to be mixed with impurities, contamination, etc., due to the joint portion contamination. In addition, in the diaphragm for semiconductor having this feature, the fluororesin provides an inactive interface, and therefore, mixing with impurities, contamination, etc., from the surface of the diaphragm for semiconductor is inhibited, and therefore, a semiconductor product can be highly cleaned.

### BRIEF DESCRIPTION OF DRAWINGS

[FIG. 1] FIG. 1 is a cross-sectional view of a diaphragm including a fluororesin molded article according to the present invention.
[FIG. 2] FIG. 2 is a diagram for describing a molding method for a fluororesin molded article, FIG. 2(a) is a cross-sectional view of a primary mold, and FIG. 2(b) is a cross-sectional view of the primary mold filled with a layered product.
[FIG. 3] FIG. 3 is a cross-sectional view of a preliminary molded article.
[FIG. 4] FIG. 4 is a diagram for describing a molding method for a fluororesin molded article, FIG. 4(a) is a cross-sectional view of a secondary mold, and FIG. 4(b) is a cross-sectional view of the secondary mold with a sintered article attached thereto.

### DESCRIPTION OF EMBODIMENTS

A fluororesin molded article according to the present invention will now be described. Note that the present invention is not intended to be limited to embodiments and drawings described below.

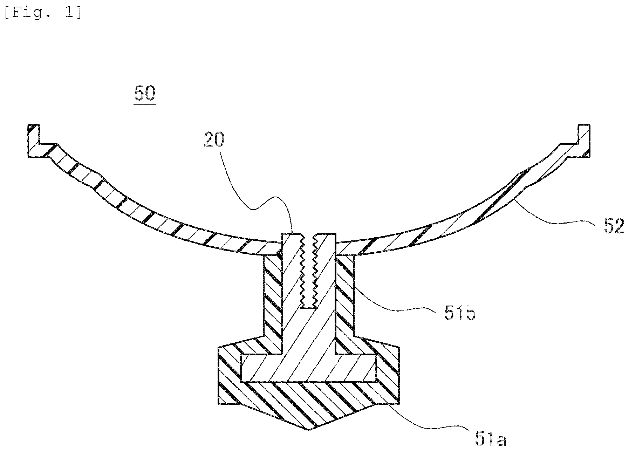

FIG. 1 is a cross-sectional view of a diaphragm 50 including a fluororesin molded article according to the present invention. The diaphragm 50 has a valve section 51a, a linking section 51b, and a membrane section 52, and in addition, a metal member 20 which is an insert. The valve section 51a and the linking section 51b, which are a first section of the diaphragm 50, are a non-deformation section that is not deformed in use. The membrane section 52, which is a second section of the diaphragm 50, is a repetitive-deformation section that is repetitively deformed in use. The first section and the second section are a sintered body of a fluororesin powder, an average particle size of the fluororesin powder contained in the first section being different from an average particle size of the fluororesin powder contained in the second section, and are integrally formed. Here, the average particle size of a fluororesin powder is defined as the average value of effective diameters measured by laser diffractometry in a dry fashion. The average particle size of a fluororesin powder can be measured using, for example, a particle size distribution measurement device. In addition, the first section and the second section are both formed from a fluororesin, and have respective degrees of resin crystallinity different from each other. As used herein, the degree of crystallinity refers to the proportion of a portion (crystalline portion) of a resin (polymer) in which molecular chains are arranged in a regular pattern to the entire polymer (the crystalline portion + the amorphous portion). A fluororesin that is a crystalline polymer may have a degree of crystallinity in the range of 30-70%. The degree of crystallinity of each section of the diaphragm 50 can be measured using, for example, wide-angle X-ray diffractometry.

The valve section 51a and the linking section 51b are preferably a sintered body of a fluororesin powder having an average particle size of 300 µm or more. The valve section 51a and the linking section 51b preferably have a degree of crystallinity of 50-70%. In the case where the valve section 51a and the linking section 51b are a sintered body of a fluororesin powder having an average particle size of 300 µm or more, and have a degree of crystallinity of 50-70, the valve section 51a and the linking section 51b have wear resistance characteristics suitable for a non-deformation section. In FIG. 1, the linking section 51b is formed in the shape of a column extending from the convex surface of the membrane section 52. The valve section 51a is integrally provided at an end of the linking section 51b, and has a shape wider than the linking section 51b in a direction perpendicular to the extension direction of the linking section 51b. In addition, the metal member 20, which is embedded in the diaphragm 50 by insert molding, is shaped such that one end portion thereof is wider than the other end portion, and the wider end portion is disposed inside the valve section 51a.

The membrane section 52 is preferably a sintered body of a fluororesin powder having an average particle size of 100 µm or less. The membrane section 52 preferably has a degree of crystallinity of not less than 30% and less than 50%. In the case where the membrane section 52 is a sintered body of a fluororesin powder having an average particle size of 100 µm or less, and has a degree of crystallinity of not less than 30% and less than 50%, the membrane section 52 has bending resistance suitable for a repetitive-deformation section. In FIG. 1, the membrane section 52 has a cross-section having a curved shape, and an end portion of the metal member 20 is exposed from the concave surface of the membrane section 52.

Examples of the fluororesin powder that is a starting material for the diaphragm 50 include powders of polytetrafluoroethylene (hereinafter referred to as "PTFE"), tetrafluoroethylene-hexafluoropropylene copolymer, tetrafluoroethylene-perfluoroalkylvinyl ether copolymer, polychlorotrifluoroethylene, polyvinylidene fluoride, polyvinyl fluoride, ethylene-tetrafluoroethylene copolymer, and ethylene-chlorotrifluoroethylene copolymer. A powder of PTFE is particularly preferable.

The diaphragm 50 can be suitably used as a medical diaphragm for use in production of a serum or vaccine. In such a medical diaphragm, sections thereof such as a membrane section and a valve section need to have respective characteristics different from each other, depending on the functions thereof. However, in conventional techniques, a membrane section, a valve section, etc., that have respective characteristics different from each other are formed as separate fluororesin molded articles, which are joined together after molding to produce a diaphragm, and therefore, the joint portion is likely to be contaminated during production. If such a diaphragm is used in production of a serum or vaccine, the resultant serum or vaccine is likely to be mixed with bacteria, etc., from the contaminated joint portion. In contrast to this, in the diaphragm 50 of the present invention, the valve section 51a having excellent wear resistance and the membrane section 52 having excellent bending resistance are formed as an integrally molded product, and therefore, is unlikely to be mixed with bacteria, etc., due to the joint portion contamination that is a problem with conventional techniques. In addition, the fluororesin molded article has an inactive interface, and therefore, by use of the diaphragm 50, mixing with bacteria, etc., from the surface of the medical diaphragm can be inhibited. As a result, a highly-safe serum or vaccine can be produced.

The diaphragm 50 can also be suitably used as a diaphragm for semiconductor for use in production of a semiconductor product. In the diaphragm 50 of the present invention, the valve section 51a having excellent wear resistance and the membrane section 52 having excellent bending resistance are formed as an integrally molded product, and therefore, is unlikely to be mixed with impurities, contamination, etc., due to the joint portion contamination that is a problem with conventional techniques. In addition, the fluororesin molded article has an inactive interface, and therefore, by use of the diaphragm 50, mixing with impurities, contamination, etc., from the surface of the diaphragm for semiconductor can be inhibited. As a result, a semiconductor product can be highly cleaned.

Next, a molding method for obtaining the fluororesin molded article of the present invention will be described. The fluororesin molded article of the present invention is obtained by performing the following steps A-D using at least two kinds of fluororesin powders which have respective average particle sizes different from each other, as a starting material. Specifically, the molding method for obtaining the fluororesin molded article of the present invention includes step A of preparing a layered product by layering at least two kinds of fluororesin powders having respective average particle sizes different from each other, step B of loading the layered product into a primary mold, and pressing the layered product to form a preliminary molded article, step C of sintering the preliminary molded article to obtain a sintered article, and step D of loading the sintered article into a secondary mold, and cooling the sintered article while pressing the sintered article.

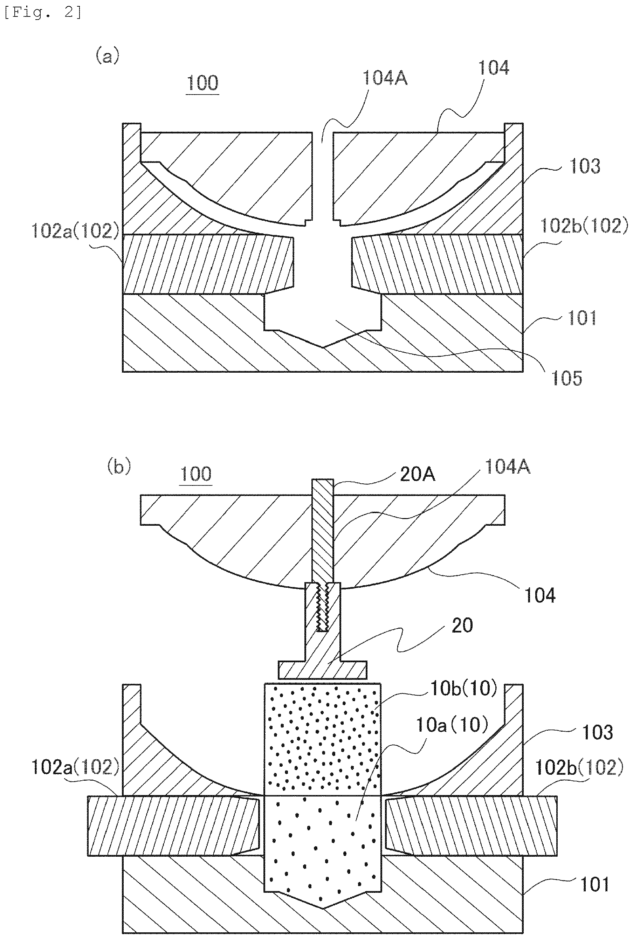

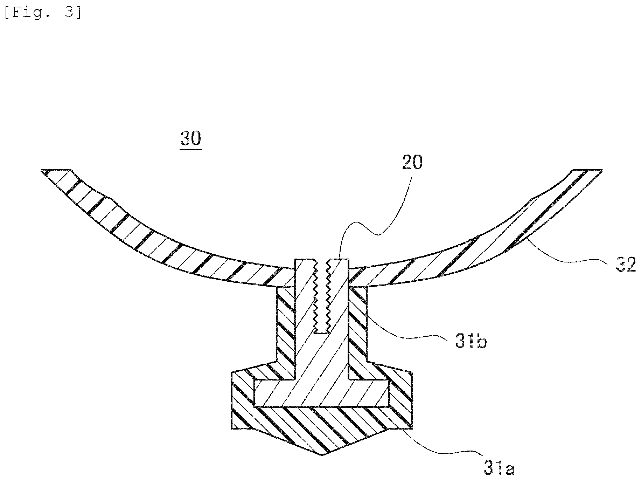

FIG. 2 is a diagram for describing a molding method for a fluororesin molded article, and describing step A and step B. FIG. 2(a) is a cross-sectional view of a primary mold 100, and FIG. 2(b) is a cross-sectional view of the primary mold 100 filled with a layered product 10. The primary mold 100 includes molds 101, 102, and 103 as a lower mold, and a mold 104 as an upper mold. As shown in FIG. 2(a), a cavity 105 is formed inside the primary mold 100 with both the upper and lower molds attached together. The cavity 105 has the shape of a preliminary molded article (shown in FIG. 3 described below) that has a greater wall thickness than that of a diaphragm 50 as a final product. In this embodiment, the mold 102 includes separate molds 102a and 102b. Before pressing, as shown in FIG. 2(b), the lower mold is assembled with the molds 102a and 102b spaced apart from each other in a horizontal direction. The mold 104 as the upper mold has a through hole 104A into which a jig 20A shown in FIG. 2(b) is to be inserted.

In step A, a fluororesin powder having an average particle size of 300 µm or more is deposited in the lower mold of the primary mold 100 including the molds 101, 102, and 103, to form a first layer 10a. A fluororesin powder having an average particle size of 100 µm or less is deposited on the first layer 10a to form a second layer 10b. Thus, the layered product 10 including a stack of the first layer 10a and the second layer 10b is formed. The wear resistance of a fluororesin molded article increases with an increase in the average particle size of a fluororesin powder as the starting material. The bending resistance of a fluororesin molded article increases with a decrease in the average particle size of a fluororesin powder as the starting material. Therefore, in the layered product 10, a layer that is to serve as a non-deformation section which is brought into contact with another member without being deformed in use after molding, such as the valve section of a diaphragm, is preferably formed of a fluororesin powder having a greater average particle size, and a layer that is to serve as a repetitive-deformation section which is repetitively deformed in use after molding, such as the membrane section of a diaphragm, is preferably formed of a fluororesin powder having a smaller average particle size. For example, two kinds of fluororesin powders are successively deposited in the lower mold while the powders are sieved over the lower mold of the primary mold 100. As a result, as shown in FIG. 2(b), the layered product 10 including the first layer 10a and the second layer 10b can be formed. In this embodiment, the fluororesin powders are directly deposited in the lower mold of the primary mold 100 so that the layered product 10 is formed and at the same time the layered product 10 is loaded into the primary mold 100. Alternatively, the two-layer layered product 10 may be previously formed before being loaded into the primary mold 100, and the completed layered product 10 may be put into the lower mold of the primary mold 100. In addition, although in this embodiment, the layered product 10 includes the two layers, i.e. the first layer 10a and the second layer 10b, the layered product 10 may include three or more layers. In the case where the layered product 10 includes three or more layers, not all of the layers have respective average particle sizes different from each other of fluororesin powders. For example, a layered product having a three-layer structure may be provided in which the first and third layers may be formed of a fluororesin powder having the same average particle size of 300 µm or more, and the second layer may be formed of a fluororesin powder having an average particle size of 100 µm or less.

In step B, a metal member 20 that is an insert for the diaphragm of FIG. 2(b) is set in the mold 104 as an upper mold with the metal member 20 attached to the jig 20A. Next, the mold 104 is driven downward, and at the same time, the molds 102a and 102b are driven inward, to press the layered product 10. The pressure applied to the layered product 10 in step B is preferably set to 50-150 kgf/cm². The layered product 10 is preferably pressed at room temperature. When the layered product 10 is pressed, fine voids in the fluororesin powder are filled, so that the apparent volume of the layered product 10 is reduced by a factor of 2-4 (i.e., the volume becomes 1/2 to 1/4 of the original volume). Thus, the layered product 10 is formed into a preliminary molded article having the shape of the cavity 105.

FIG. 3 is a cross-sectional view of a preliminary molded article 30. The preliminary molded article 30 has first preliminary molded portions 31a and 31b that have been formed by pressing the first layer 10a of the layered product 10, and a second preliminary molded portion 32 that has been formed by pressing the second layer 10b of the layered product 10. The metal member 20 made of stainless steel (e.g., SUS316L) is provided in the preliminary molded article 30 by insert molding. Stainless steel is less compatible with resin materials, and therefore, it is difficult to apply insert molding to stainless steel using conventional techniques. In the molding method for a fluororesin molded article according to the present invention, preliminary molding is performed with the metal member 20 wrapped in a fluororesin powder, particularly PTFE powder. Therefore, adhesion between the fluororesin and the stainless steel can be enhanced. As a result, the metal member 20 can be integrated into the fluororesin by insert molding.

In step C, the preliminary molded article 30 is removed from the primary mold 100, and is sintered in a heating furnace at a temperature that is higher than or equal to the melting point of the fluororesin powder. In the case where a powder of PTFE (melting point: 327°C) is used as the fluororesin powder, the sintering temperature is preferably set to 360-380°C. When the fluororesin powder is sintered, the internal stress of the preliminary molded article 30 is removed, so that fluororesin powder particles are fused together to form a sintered article.

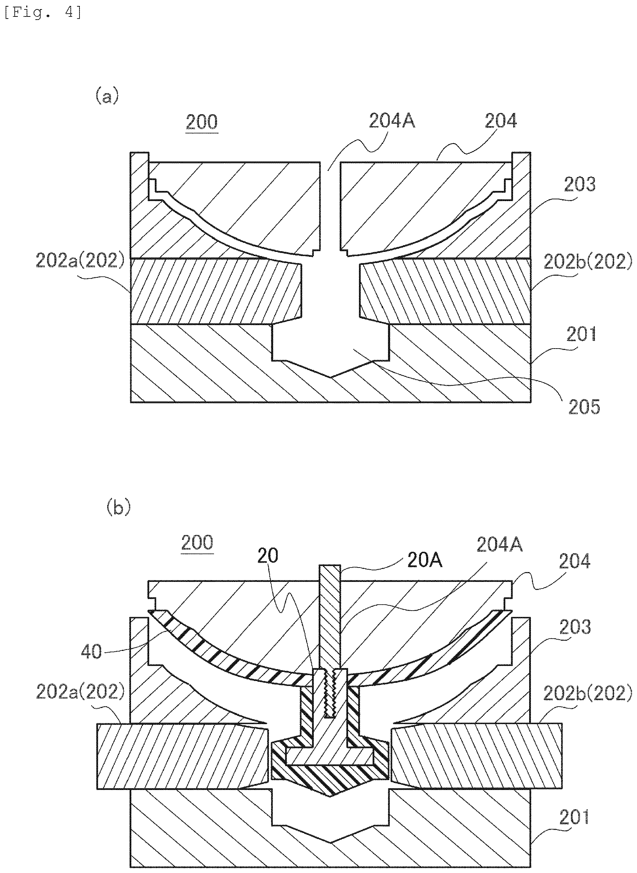

FIG. 4 is a diagram for describing a molding method for a fluororesin molded article, and describing step D. FIG. 4(a) is a cross-sectional view of a secondary mold 200, and FIG. 4(b) is a cross-sectional view of the secondary mold 200 with a sintered article 40 attached thereto. The secondary mold 200 includes molds 201, 202, and 203 as a lower mold, and a mold 204 as an upper mold. As shown in FIG. 4(a), a cavity 205 is formed inside the secondary mold 200 with both the lower and upper molds attached together. The cavity 205 has the shape of the diaphragm 50 as a final product. In this embodiment, the mold 202 includes separate molds 202a and 202b. Before pressing, as shown in FIG. 4(b), the lower mold is assembled with the molds 202a and 202b spaced apart from each other. The mold 204 as the upper mold has a through hole 204A into which a jig 20A shown in FIG. 4(b) is to be inserted.

In step D, the sintered article 40 is set in the mold 204 as the upper mold with the jig 20A attached to the metal member 20 of FIG. 4(b). Next, the mold 204 is driven downward and at the same time the molds 202a and 202b are driven inward to press the sintered article 40 while the sintered article 40 is heated at a temperature that is higher than or equal to the melting point of the fluororesin powder. The pressure applied to the sintered article 40 in step D is preferably set to 150-250 kgf/cm². In the case where a powder of PTFE (melting point: 327°C) is used as the fluororesin powder, the sintering temperature is preferably set to 360-380°C. When the sintered article 40 is heated while being pressed, the sintered article 40 is plastically deformed, and is formed into the shape of the cavity 205. Thereafter, the sintered article 40 is cooled with the secondary mold 200 maintained in the pressurized state, and thereafter, the pressure applied to the secondary mold 200 is removed. A cooling temperature in step D is preferably set to 110-130°C. When the fluororesin is cooled to 110-130°C, the fluororesin is less likely to be deformed. After the end of cooling, the secondary mold 200 is disassembled. As a result, the diaphragm 50 formed in the shape of the cavity 205 is obtained.

The volume of the cavity 205 formed in the secondary mold 200 is preferably set to be 0.80-0.95 times as great as the volume of the cavity 105 formed in the primary mold 100. The preliminary molded article 30, which is the prototype of the diaphragm 50, is formed by pressing using the primary mold 100, and thereafter, is pressed using the secondary mold 200, whose cavity has a slightly smaller volume than that of the cavity of the primary mold 100, whereby the diaphragm 50 can be precisely formed only by compression molding. Therefore, it is not necessary to perform cutting or the like using a milling machine or the like after molding, and therefore, the yield can be improved.

The degree of crystallinity of the fluororesin can be controlled based on the cooling rate in step D. In addition, the degree of crystallinity of the fluororesin correlates with the friction coefficient of the fluororesin, i.e. as the degree of crystallinity decreases, the friction coefficient increases. For example, by increasing the cooling rate in step D, the degree of crystallinity of the fluororesin is reduced, so that the friction coefficient of the surface of the diaphragm 50 can be increased. Conversely, by reducing the cooling rate in step D, the degree of crystallinity of the fluororesin is increased, so that the friction coefficient of the surface of the diaphragm 50 can be reduced.

Thus, in the diaphragm 50 formed using the molding method described above, the valve section 51a and the linking section 51b, which are a sintered body of the fluororesin powder having an average particle size of 300 µm or more derived from in the first layer 10a of the layered product 10, and the membrane section 52, which is a sintered body of the fluororesin powder having an average particle size of 100 µm or less derived from the second layer 10b of the layered product 10, are integrally formed.

### [Example]

Next, the fluororesin molded article of the present invention will further be described on the basis of a specific example.

In step A, in the iron primary mold 100 of FIG. 2(a), a powder of PTFE having an average particle size of 20 µm was deposited in the lower mold assembled by attaching the molds 101, 102, and 103 together to form the first layer 10a, and PTFE having an average particle size of 480 µm was deposited on the first layer 10a to form the second layer 10b, so that the layered product 10 including two layers, i.e. the first layer 10a and the second layer 10b, was formed. In step B, as shown in FIG. 2(b), the metal member 20 with the jig 20A attached thereto was set in the mold 104, and the deposited body 10 was pressed with a pressure of 100 kgf/cm² at room temperature by driving the mold 104 downward and driving the molds 102a and 102b inward with the layered product 10 loaded in the lower mold, to obtain the preliminary molded article 30. In step C, the preliminary molded article 30 was removed from the primary mold 100, and was sintered in a heating furnace at 373°C, to obtain the sintered article 40. In step D, as shown in FIG. 4(b), the sintered article 40 in which the jig 20A was attached to the metal member 20 was set in the mold 204, and the sintered article 40 was heated to 373°C while being pressed with a pressure of 200 kgf/cm² by driving the mold 204 downward and driving the molds 202a and 202b inward, and thereafter, was cooled to 120°C. After cooling, the secondary mold 200 was disassembled. Thus, the diaphragm 50 of the example was obtained.

The degree of crystallinity of the diaphragm 50 of the example was measured using wide-angle X-ray diffractometry at the valve section 51a, the linking section 51b, and the membrane section 52. The valve section 51a and the linking section 51b had a degree of crystallinity of 30%, i.e. high wear resistance. Such characteristics at the valve section 51a and the linking section 51b met specifications required for the non-deformation section. In addition, the membrane section 52 had a degree of crystallinity of 70%, i.e. excellent bending resistance. Such characteristics at the membrane section 52 met specifications required for the repetitive-deformation section.

### INDUSTRIAL APPLICABILITY

The fluororesin molded article of the present invention is preferably applicable, particularly, as a diaphragm for medical use or semiconductor, and is also applicable as diaphragms for other applications, such as industry, agriculture, research, food, and semiconductor.

### REFERENCE SIGNS LIST

- 50: DIAPHRAGM (FLUORORESIN MOLDED ARTICLE)
- 51a: VALVE SECTION (FIRST SECTON)
- 51b: LINKING SECTION (FIRST SECTION)
- 52: MEMBRANE SECTION (SECOND SECTION)

## Claims

1. A fluororesin molded article (50) **characterized in that** it is an integrally molded product including a first section (51a, 51b) and a second section (52), a function of the first section being different from a function of the second section, and
the first section and the second section are a sintered body of a fluororesin powder, an average particle size of the fluororesin powder contained in the first section being different from an average particle size of the fluororesin powder contained in the second section.

2. The fluororesin molded article of claim 1, **characterized in that**
the first section is a non-deformation section formed of a sintered body of a fluororesin powder having an average particle size of 300 µm or more, and
the second section is a repetitive-deformation section formed of a sintered body of a fluororesin powder having an average particle size of 100 µm or less.

3. The fluororesin molded article of claim 1 or 2, **characterized in that**
the first section is a non-deformation section formed of a fluororesin having a degree of crystallinity of 50-70%, and
the second section is a repetitive-deformation section formed of a fluororesin having a degree of crystallinity of not less than 30% and less than 50%.

4. The fluororesin molded article of any one of claims 1-3, **characterized in that**
the fluororesin is polytetrafluoroethylene.

5. The fluororesin molded article of any one of claims 2-4, **characterized in that**
the repetitive-deformation section is formed as a membrane section (52) of a diaphragm (50), the membrane section having a curved cross-sectional shape,
the non-deformation section is formed as a column-shaped linking section (51b) extending from the membrane section on a convex surface of the curved shape, and a valve section (51a) integrally provided at an end of the linking section and having a shape wider than the linking section in a direction perpendicular to an extension direction of the linking section, and
a metal member (20) having a first and a second end portion, the first end portion being wider than the second end portion, is embedded by insert molding with the first end portion disposed inside the valve section, and the second end portion exposed from the membrane section on a concave surface of the curved shape.

6. A medical diaphragm (50) for use in production of a serum or vaccine, **characterized in that** the medical diaphragm includes the fluororesin molded article of any one of claims 1-5.

7. A medical diaphragm (50) for use in production of a serum or vaccine, **characterized in that** the medical diaphragm includes the fluororesin molded article of any one of claims 2-5, and
the non-deformation section is formed as a valve section (51a) of the diaphragm, and
the repetitive-deformation section is formed as a membrane section (52) of the diaphragm.

8. A diaphragm (50) for semiconductor for use in cleaning of a semiconductor product, **characterized in that** the diaphragm includes the fluororesin molded article of any one of claims 1-5.

9. A diaphragm (50) for semiconductor for use in cleaning of a semiconductor product, **characterized in that** the diaphragm includes the fluororesin molded article of any one of claims 2-5, and
the non-deformation section is formed as a valve section (51a) of the diaphragm, and
the repetitive-deformation section is formed as a membrane section (52) of the diaphragm.
